# EUROPÄISCHE PATENTSCHRIFT

(11) **EP 4 314 731 B1**
(45) Veröffentlichungstag und Bekanntmachung des Hinweises auf die Patenterteilung: **16.07.2025**
(21) Anmeldenummer: 22708490.2
(22) Anmeldetag: 10.02.2022
(51) Int. Cl.: G01G 19/02, G01G 19/08

(54) **SYSTEM UND VERFAHREN ZUR COMPUTERGESTÜTZTEN SCHÄTZUNG EINES WERTS FÜR DIE GESAMTMASSE EINES FAHRZEUGSYSTEMS**
SYSTEM AND METHOD FOR THE COMPUTER AIDED DETERMINATION OF A VALUE FOR THE MASS OF A VEHICLE SYSTEM
DISPOSITIF ET PROCÉDÉ POUR LA DÉTERMINATION AIDÉE PAR ORDINATEUR D'UNE VALEUR POUR LA MASSE D'UN SYSTÈME DE VÉHICULE

(30) Priorität: 26.03.2021 DE 102021107705
(43) Veröffentlichungstag der Anmeldung: 07.02.2024
(73) Patentinhaber: KNORR-BREMSE Systeme für Nutzfahrzeuge GmbH, 80809 München (DE)
(72) Erfinder: JUNDT, Oliver, 74394 Hessigheim (DE); WEIS, Rüdiger, 70469 Stuttgart (DE); LEIBBRAND, Jonas, 75223 Niefern-Öschelbronn (DE)
(86) Internationale Anmeldenummer: PCT/EP2022/053295
(87) Internationale Veröffentlichungsnummer: WO 2022/199932

(56) Entgegenhaltungen:
- DE-A1- 10 307 511
- DE-A1- 102015 120 831

## Beschreibung

Die Erfindung geht aus von einem System zur computergestützten Schätzung oder Ermittlung eines Werts für die Gesamtmasse eines Fahrzeugsystems gemäß dem Oberbegriff von Anspruch 1 und von einem Verfahren zur computergestützten Schätzung oder Ermittlung eines Werts für die Gesamtmasse eines Fahrzeugsystems gemäß dem Oberbegriff von Anspruch 9. Weiterhin betrifft die Erfindung gemäß dem Oberbegriff von Anspruch 6 auch ein Fahrzeugsystem, welches ein Zugfahrzeug und gegebenenfalls wenigstens einen mit dem Zugfahrzeug gekoppelten Anhänger umfasst.

Brems- und Fahrzeugregelsysteme brauchen einen möglichst genauen Wert für die Gesamtmasse des Fahrzeugsystems, um das betreffende Regelsystem mit einer gewünschten Genauigkeit ausführen zu können. Vor allem bei Nutzfahrzeugen schwankt die Gesamtmasse infolge unterschiedlicher Beladungen teils beträchtlich, sodass eine wiederholte Massebestimmung durchgeführt wird, um die Bremsund Fahrzeugregelsysteme unterstützen zu können.

Für den Fall, dass bei einem Zugfahrzeug und eventuell angekoppeltem Anhänger für jede einzelne Achse ein Achslastsensor vorhanden ist, kann die Gesamtfahrzeugmasse als Summe der Achslasten relativ genau bestimmt werden. Jedoch verfügt nur eine geringe Anzahl von Zugfahrzeugen und Anhängern an jeder Achse über einen Achslastsensor. In der Regel ist lediglich an einer durch Luftfederbälge gefederten Hinterachse des Zugfahrzeugs ein Achslastsensor vorhanden, wobei der Luftfederbalgdruck mit der Achslast korreliert. Bei vollständig stahlgefederten Fahrzeugen steht in den meisten Fällen keine gemessene Achslast zur Verfügung.

Eine unmittelbare Massebestimmung ist daher mangels Achslastsensoren an allen Achsen nur selten möglich. Stattdessen wird dann die Gesamtmasse des Fahrzeugsystems oft geschätzt.

DE 10 2015 120 831 A1 offenbart eine gemischte autonome und manuelle Steuerung eines Fahrzeugs. Das Fahrzeug kann einen Betriebsmodus beinhalten, in dem das Fahrzeug autonom arbeitet, aber durch eine Mischung aus autonomen Steuerungseingaben und manuellen Steuerungseingaben beeinflusst wird. Ein erstes Gewicht kann manuellen Steuerungseingaben zugewiesen werden, und ein zweites Gewicht kann autonomen Steuerungseingaben zugewiesen werden. Die zugewiesenen ersten und zweiten Gewichte können auf ein Fahrzeugsystem angewendet werden. Als Antwort auf den Empfang einer manuellen Steuerungseingabe kann eine Beeinflussung des autonomen Betriebs des Fahrzeugs durch die empfangene manuelle Steuerungseingabe in einem Maß bewirkt werden, das dem ersten Gewicht entspricht, und ohne den autonomen Betrieb des Fahrzeugsystems zu deaktivieren.

DE 103 07 511 A1 offenbart ein Verfahren zur computergestützten Schätzung der Masse eines Fahrzeugs basierend auf der Gleichgewichtsbeziehung zwischen der Antriebskraft und der Summe aus Trägheitskräften und den Antriebswiderständen. Die Masse kann daher beispielsweise durch ein gleichzeitiges Erfassen eines Antriebsmomentes (ein auf die Räder wirkendes Drehmoment) und einer resultierenden Beschleunigung und/oder deren Ableitungen geschätzt werden. Da die Reibungskräfte in der Regel nicht genau ermittelbar sind, ist eine genaue Ermittlung der Masse aus solchen dynamischen Größen (d.h. ohne Nutzung einer Waage) in der Regel nur sukzessive durch eine Vielzahl von Messungen möglich. Zu einem gegebenen Zeitpunkt liegt somit eine mehr oder weniger genaue Schätzung der Masse vor. Diese Schätzung kann beispielsweise unter Nutzung des sogenannten RLS-(Recursive-Least-Squares-) Algorithmus oder eines RLS-Schätzers erfolgen, wobei die Schätzung auf eine Anregung des Schätzers durch die entsprechenden Eingangsgrößen erfolgt. Um eine möglichst zuverlässige Schätzung der Masse zu erreichen, wird das Schätzung über einen längeren Zeitraum verbessert. Auf diese Weise können Fehlerquellen hinsichtlich des momentanen Schätzwertes vermieden oder zumindest deren Auswirkungen verringert werden. Solche Fehlerquellen ergeben sich beispielsweise durch eine Änderung von Hanglagen bei aufeinanderfolgenden Stillstandzeiten des Nutzfahrzeuges oder durch die unbekannte Reibung (zur Straße, der drehenden Teile des Fahrzeuges, Wind etc.).

Wenn dem Schätzer nicht mitgeteilt wird, dass sich die Beladung geändert hat, so wird der geschätzte Wert für die Gesamtmasse nicht mit der tatsächlichen Gesamtmasse übereinstimmen bzw. erst nach einem sehr langen Lernprozess. Dies kann erhebliche Konsequenzen für das Fahrverhalten des Fahrzeuges zur Folge haben. Falls es beispielsweise nach einem Beladungswechsel zu einer Hangabwärtsfahrt kommt (zum Beispiel, ohne dass der Fahrer eine Beschleunigung ausführt), kann es zu einer kritischen Situation kommen, da die benötigte Bremskraft noch nicht optimal berechnet wurde. Die Masseschätzung wird sich erst nach und nach an die Beladungsänderung anpassen, da in dem Gedächtnis des Schätzers immer noch Messwerte zur veralteten Beladung vorhanden sind und die neuen Eingangswerten noch nicht die Korrektur durchgeführt haben. Ein Fahrer mag vorsorglich diese Situation berücksichtigen, aber für autonom fahrende Fahrzeugen könnte ein veralteter Massewert negative Auswirkungen haben.

Daher besteht ein Bedarf nach einer weiteren Möglichkeit, die Gesamtmasse eines Fahrzeugsystems zu schätzen oder zu ermitteln, wobei eine Änderung der Beladung und eine Änderung der Anzahl der mit dem Zugfahrzeug gekoppelter Anhänger erkannt berücksichtigt werden soll, um den Schätzprozess zu beschleunigen.

Der Erfindung liegt daher die Aufgabe zugrunde, ein System und ein Verfahren zur computergestützten Schätzung oder Ermittlung eines Werts für die Gesamtmasse eines Fahrzeugsystems zur Verfügung zu stellen, mit welchem der Schätz- oder Ermittlungsprozess schneller vonstattengehen kann. Weiterhin soll auch ein Fahrzeugsystem mit einem solchen System zur Verfügung gestellt werden.

Diese Aufgabe wird erfindungsgemäß durch die Merkmale der Ansprüche 1, 6 und 9 gelöst.

### Offenbarung der Erfindung

Gemäß einem ersten Aspekt der Erfindung wird ein System zur computergestützten Schätzung oder Ermittlung eines Werts für die Gesamtmasse eines Fahrzeugsystems vorgeschlagen, welches ein Zugfahrzeug und gegebenenfalls wenigstens einen mit dem Zugfahrzeug gekoppelten Anhänger umfasst, wobei das System
a) eine Sensoreinrichtung aufweist, welche ausgebildet ist, dass ihre Sensorsignale Zustandsdaten des Fahrzeugsystems repräsentieren, welche sich abhängig von einer Beladung des Fahrzeugsystems und von einer Anzahl mit dem Zugfahrzeug gekoppelter Anhänger ändern und anhand welcher erkannt werden kann, ob sich eine Beladung des Fahrzeugsystems und eine Anzahl mit dem Zugfahrzeug gekoppelter Anhänger zwischen einem ersten Zeitpunkt (t1) und wenigstens einem in Bezug auf den ersten Zeitpunkt (t1) späteren zweiten Zeitpunkt (t2) geändert oder nicht geändert hat, und
b) eine Auswerteeinrichtung aufweist, welche ausgebildet ist, dass sie insbesondere unabhängig von den Zustandsdaten zu einem ersten Zeitpunkt (t1) im Rahmen einer ersten Schätzung oder Ermittlung einen ersten Wert (W1) für die Gesamtmasse des Fahrzeugsystems schätzt oder ermittelt, wobei
c) die Auswerteeinrichtung weiterhin ausgebildet ist, dass sie anhand der Zustandsdaten erkennen kann, ob sich die Beladung des Fahrzeugsystems und die Anzahl mit dem Zugfahrzeug gekoppelter Anhänger zwischen dem ersten Zeitpunkt (t1) und dem wenigstens einen zweiten Zeitpunkt (t2) geändert oder nicht geändert hat, und dass
d) die Auswerteeinrichtung weiterhin ausgebildet ist, dass sie
   - den ersten Wert (W1) als gültigen Wert für die Gesamtmasse des Fahrzeugsystems beibehält oder als Initialwert für eine weitere Ermittlung oder Schätzung der Gesamtmasse des Fahrzeugsystems heranzieht, falls sie auf der Basis der Zustandsdaten erkannt hat, dass zwischen dem ersten Zeitpunkt (t1) und dem zweiten Zeitpunkt (t2) weder eine signifikante Änderung der Beladung des Fahrzeugsystems noch eine Änderung der Anzahl mit dem Zugfahrzeug gekoppelter Anhänger stattgefunden hat, aber
   - im Rahmen einer zweiten, zeitlich auf die erste Schätzung oder Ermittlung nachfolgenden Schätzung oder Ermittlung einen zweiten Wert (W2) für die Gesamtmasse des Fahrzeugsystems insbesondere unabhängig von den Zustandsdaten schätzt oder ermittelt und den ersten Wert (W1) verwirft, falls sie auf der Basis der Zustandsdaten erkannt hat, dass zwischen dem ersten Zeitpunkt (t1) und dem zweiten Zeitpunkt (t2) eine Änderung der Beladung des Fahrzeugsystems und/oder eine Änderung der Anzahl mit dem Zugfahrzeug gekoppelter Anhänger stattgefunden hat (haben).

Gemäß einem zweiten Aspekt der Erfindung wird ein Verfahren zur computergestützten Schätzung oder Ermittlung eines Werts für die Gesamtmasse eines Fahrzeugsystems vorgeschlagen, welches ein Zugfahrzeug und gegebenenfalls wenigstens einen mit dem Zugfahrzeug gekoppelten Anhänger umfasst, wobei bei dem Verfahren
a) Zustandsdaten des Fahrzeugsystems erfasst werden, welche sich abhängig von einer Beladung des Fahrzeugsystems und von einer Anzahl mit dem Zugfahrzeug gekoppelter Anhänger ändern und anhand welcher erkannt werden kann, ob sich eine Beladung des Fahrzeugsystems und eine Anzahl mit dem Zugfahrzeug gekoppelter Anhänger zwischen einem ersten Zeitpunkt (t1) und wenigstens einem in Bezug auf den ersten Zeitpunkt (t1) späteren zweiten Zeitpunkt (t2) geändert oder nicht geändert hat, und
b) insbesondere unabhängig von den Zustandsdaten zu einem ersten Zeitpunkt (t1) im Rahmen einer ersten Schätzung oder Ermittlung ein erster Wert (W1) für die Gesamtmasse des Fahrzeugsystems geschätzt oder ermittelt wird, wobei
   - der erste Wert (W1) als gültiger Wert für die Gesamtmasse des Fahrzeugsystems beibehalten oder als Initialwert für eine weitere Ermittlung oder Schätzung der Gesamtmasse des Fahrzeugsystems hergezogen wird, falls auf der Basis der Zustandsdaten erkannt worden ist, dass zwischen dem ersten Zeitpunkt (t1) und dem zweiten Zeitpunkt (t2) weder eine signifikante Änderung der Beladung des Fahrzeugsystems noch eine Änderung der Anzahl mit dem Zugfahrzeug gekoppelter Anhänger stattgefunden hat, aber
   - im Rahmen einer zweiten, zeitlich auf die erste Schätzung oder Ermittlung nachfolgenden Schätzung oder Ermittlung ein zweiter Wert (W2) für die Gesamtmasse des Fahrzeugsystems insbesondere unabhängig von den Zustandsdaten geschätzt oder ermittelt und der erste Wert (W1) verworfen wird, falls auf der Basis der Zustandsdaten erkannt worden ist, dass zwischen dem ersten Zeitpunkt (t1) und dem zweiten Zeitpunkt (t2) eine Änderung der Beladung des Fahrzeugsystems und/oder eine Änderung der Anzahl mit dem Zugfahrzeug gekoppelter Anhänger stattgefunden hat (haben).

Die Anzahl der mit dem Zugfahrzeug gekoppelten Anhänger kann der Wert Null sein, dann besteht das Fahrzeugsystem lediglich aus dem Zugfahrzeug, oder eine beliebige ganzen Zahl sein, wobei die Anzahl ankoppelbarer Anhänger natürlich nach oben hin begrenzt ist.

Die Erfindung hat erkannt, dass in den Fällen, in denen beispielsweise nicht an jeder Achse der Fahrzeuge des Fahrzeugsystems Achslastsensoren vorhanden sind, aus denen die Gesamtmasse des Fahrzeugsystem dann ohne weiteres direkt, d.h. über die Achslastsignale der Achslastsensoren bestimmt werden könnte, die Gesamtmasse insbesondere unabhängig von den Zustandsdaten mit höher Güte geschätzt oder bestimmt und dann der geschätzte Wert für die Gesamtmasse solange als gültiger Wert herangezogen werden kann, solange sich die Zustandsdaten nicht (signifikant) ändern. Für die Ermittlung der Zustandsdaten ist es ausreichend, wenn nicht alle Achsen des Fahrzeugsystems mit Achslastsensoren ausgestattet sind, weil es bereits mit wenigen Achslastsensoren möglich ist, eine Änderung der Zustandsdaten und damit eine Änderung der Beladung des Fahrzeugsystems detektieren zu können. Eine solche Änderung der Zustandsdaten hat dann die Konsequenz, dass der bis dahin geschätzte Wert (W1) für die Gesamtmasse nicht weiterverwendet werden kann. Umgekehrt, wenn sich die Zustandsdaten nicht (signifikant) geändert haben, dann deutet dies darauf hin, dass sich weder die Beladung noch die Anzahl der an das Zugfahrzeug angekoppelten Anhänger verändert hat, so dass der bis dahin geschätzte Wert (W1) für die Gesamtmasse weiterhin herangezogen werden kann bzw. weiterhin gültig ist.

Mit anderen Worten wird der von der Auswerteeinrichtung ermittelte oder geschätzte erste Wert (W1) für die Gesamtmasse des Fahrzeugsystems, welcher beispielsweise eine hohe Güte aufweist, beispielsweise für weitere Berechnungen oder als Eingangswert für weitere Systeme beibehalten und/oder für eine weitere Schätzung oder Ermittlung herangezogen, wenn anhand der Zustandsdaten erkannt worden ist, dass sich der Beladungszustand des Fahrzeugsystems nicht oder nicht signifikant verändert hat und auch die Anzahl der mit dem Zugfahrzeug gekoppelten Anhänger nicht verändert hat.

Dann liegt auch beispielsweise im Stillstand des Fahrzeugsystems ein Wert für die Gesamtmasse des Fahrzeugsystems vor, der beispielsweise im Laufe eines vorangehenden Fahrzyklus auf der Basis einer Gleichgewichtsbeziehung zwischen der Antriebskraft und der Summe aus Trägheitskräften und den Antriebswiderständen als erster Wert ermittelt worden ist. Auch kann ein neuerliches Einlernen der Gesamtmasse, die zum Erreichen einer gewissen Schätzgüte zeitaufwendig sein kann, entfallen oder sich verkürzen.

Wie oben bereits ausgeführt, kann der erste Wert für die Gesamtmasse des Fahrzeugsystems beispielsweise auf der Basis einer Gleichgewichtsbeziehung zwischen der Antriebskraft und der Summe aus Trägheitskräften und den Antriebswiderständen als erster Wert ermittelt worden sein.

Durch die in den Unteransprüchen angegebenen Merkmale sind vorteilhafte Fortbildungen der Erfindung definiert.

Gemäß einer Fortbildung des Systems kann das System beispielsweise einen nichtflüchtigen Datenspeicher aufweisen und die Auswerteeinrichtung mit dem nichtflüchtigen Datenspeicher derart zusammenwirken, dass die Auswerteeinrichtung
a) zu dem ersten Zeitpunkt (t1) den ersten Wert (W1) für die Gesamtmasse des Fahrzeugsystems und die dann vorliegende ersten Zustandsdaten (Z1) in den nichtflüchtigen Datenspeicher einliest, und
b) zu dem wenigstens einen zweiten Zeitpunkt (t2) zweite Zustandsdaten (Z2) bestimmt und mit den ersten Zustandsdaten (Z1) vergleicht, und falls
   - die zweiten Zustandsdaten (Z2) von den ersten Zustandsdaten (Z1) um mehr als eine erlaubte Abweichung abweichen, den ersten Wert (W1) verwirft und den zweiten Wert (W2) schätzt oder ermittelt, aber falls
   - die zweiten Zustandsdaten (Z2) um die erlaubte Abweichung oder weniger als die erlaubte Abweichung von den ersten Zustandsdaten (Z1) abweichen, den ersten Wert (W1) aus dem Datenspeicher ausliest und ihn als gültigen Wert für die Gesamtmasse des Fahrzeugsystems beibehält,

Auch kann die Auswerteeinrichtung des Systems weiterhin ausgebildet sein, dass sie den ersten Wert (W1) auch dann als gültigen Wert für die Gesamtmasse des Fahrzeugsystems beibehält, auch wenn zwischen dem ersten Zeitpunkt (t1) und dem zweiten Zeitpunkt (t2) durch die Auswerteeinrichtung der Eintritt eines Ereignisses festgestellt worden ist, welches theoretisch zu einer Änderung der Gesamtmasse des Fahrzeugsystems geführt haben könnte. Dabei kann das Ereignis wenigstens eines der folgenden Ereignisse sein: Wenigstens ein Zündungswechsel des Zugfahrzeugs, bevorzugt zwei Zündungswechsel hintereinander, und/oder ein Zeitraum des Stillstands des Fahrzeugsystems, welcher einen vorgegebenen Zeitraum des Stillstands des Fahrzeugsystems überschreitet. Mit anderen Worten wird dadurch verhindert, dass trotz Feststellen eines Ereignisses, welches theoretisch zu einer Änderung der Gesamtmasse des Fahrzeugsystems geführt haben könnte, aber tatsächlich nicht zu einer Änderung der Gesamtmasse des Fahrzeugsystems geführt hat, der erste Wert (W1) für die Gesamtmasse beibehalten oder weiterhin als Eingangswert für andere Systeme herangezogen und nicht neuerlich ein Wert für die Gesamtmasse geschätzt oder bestimmt wird.

Ein Zündungswechsel des Zugfahrzeugs tritt ein, wenn bei dem Zugfahrzeug die Zündung ausgeschaltet wird, wenn sie zuvor eingeschaltet war, wenn beispielsweise eine Antriebsmaschine des Zugfahrzeugs vom Zustand "ein" in den Zustand "aus" geschaltet wird. Der Begriff "Zündungswechsel" bzw. "Zündung" ist weit auszulegen, weil neben Zugfahrzeugen mit Brennkraftmaschine als Antriebsmaschine auch solche mit einer Kombination aus Brennkraftmaschine und Elektromotor und auch Zugfahrzeuge einbezogen sind, welche ausschließlich durch einen Elektromotor angetrieben werden.

Beispielsweise erhält die Auswerteeinrichtung hierzu ein Geschwindigkeitssignal wenigstes eines Radgeschwindigkeitssensors des Zugfahrzeugs und/oder wenigstens eines Anhängers, um den Stillstand feststellen zu können, und/oder das Signal eines Zündschalters des Zugfahrzeugs.

Auch kann eine Beladungsänderung durch wenigstens einen Schwingungsaufnehmer erkannt werden, der beispielsweise eine vertikale Erfassungsrichtung aufweist und dann die durch einen Beladungsvorgang ausgelösten Schwingungen erfassen und in die Auswerteeinrichtung einsteuert kann.

Die Sensoreinrichtung des Systems kann wenigstens Folgendes umfassen:
a) wenigstens einen Achslastsensor an wenigstens einer Achse des Zugfahrzeugs und/oder an wenigstens einer Achse des wenigstens einen Anhängers, welcher als Sensorsignal der Auswerteeinrichtung wenigstens ein Achslastsignal liefert, und/oder
b) eine Anhängererkennung, welche als Sensorsignal der Auswerteeinrichtung eine Information über die Anzahl von an das Zugfahrzeug angekoppelten Anhängern liefert, und/oder
c) eine Kameraeinrichtung mit wenigstens einer Kamera, welche derart am Zugfahrzeug und/oder an dem wenigstens einen Anhänger angeordnet ist, dass sie wenigstens ein Bildsignal mit einer Information über die Anzahl von mit dem Zugfahrzeug gekoppelter Anhänger liefert, und/oder durch
d) wenigstens einen LIDAR-Sensor oder einen RADAR-Sensor, welcher derart am Zugfahrzeug und/oder an dem wenigstens einen Anhänger angeordnet ist, dass sie wenigstens ein Signal mit einer Information über die Anzahl von mit dem Zugfahrzeug gekoppelter Anhänger liefert, und/oder durch
e) wenigstens einen Ultraschallsensor, welcher derart am Zugfahrzeug und/oder an dem wenigstens einen Anhänger angeordnet ist, dass sie wenigstens ein Signal mit einer Information über die Anzahl von mit dem Zugfahrzeug gekoppelter Anhänger liefert.

Insbesondere kann die wenigstens eine Kamera bevorzugt derart am Zugfahrzeug angeordnet ist, dass sie einen rückwärtigen Bereich des Zugfahrzeugs erfasst und welche wenigstens ein Bildsignal mit einer Information über die Anzahl von mit dem Zugfahrzeug gekoppelter Anhänger liefert. Diese wenigstens eine Kamera kann auch eine Spiegelkamera sein, welche in oder an einem Seitenspiegel des Zugfahrzeugs angeordnet ist.

In Zugfahrzeugen ist oftmals eine Anhängererkennung ausgeführt, welche ein Anhänger-Erkennungssignal erzeugt. Über die Anhängererkennung kann die Auswerteeinrichtung insbesondere Folgendes erkennen: Die Anhängerverfügbarkeit (Anhänger erkannt, nicht erkannt, Erkennung nicht verfügbar), die Erkennungsmethode, z.B. über Strommessung am CAN ISO11992, PLC, den Anhängertyp (Anhänger ohne ABS, mit ABS, mit EBS), den Zustand und die Verfügbarkeit des Anhängers (ABS, Retarder), die Anhängereigenschaften, welche beispielsweise über CAN ISO11992 vom Anhänger der Auswerteeinrichtung auf dem Zugfahrzeug übermittelt werden wie z.B. die Anhängerart (Auflieger, Dolly, etc.), die Anzahl der Achsen, die Anzahl angekoppelter Anhänger, und die Anhängergeometrie (z.B. Radstand).

Auch können Achslastsignale eines oder mehrerer Achslastsensoren des Anhängers über CAN ISO11992 vom Anhänger der Auswerteeinrichtung auf dem Zugfahrzeug übermittelt werden.

Die Erfindung betrifft in einem dritten Aspekt auch ein Fahrzeugsystem, welches ein Zugfahrzeug und gegebenenfalls wenigstens einen mit dem Zugfahrzeug gekoppelten Anhänger sowie ein Bremssystem oder ein Fahrzeugsteuersystem oder ein Fahrzeugregelsystem und ein oben beschriebenes System umfasst, wobei das Bremssystem oder das Fahrzeugsteuersystem oder das Fahrzeugregelsystem mit dem System derart zusammenwirkt, dass das System den ersten Wert W1 und/oder den zweiten Wert W2 für die Gesamtmasse des Fahrzeugsystems an das Bremssystem, das Fahrzeugsteuersystem oder an das Fahrzeugregelsystem liefert.

Das Bremssystem oder Fahrzeugsteuersystem oder Fahrzeugregelsystem kann insbesondere ein elektronisch geregeltes Bremssystem (EBS), eine Fahrdynamikregelung, eine Getriebesteuerung, eine Steuerung für wenigstens teilweises autonomes Fahren und/oder eine Koppelkraftregelung zwischen dem Zugfahrzeug und dem wenigstens einen Anhänger umfassen.

Gemäß einer besonders zu bevorzugenden Ausführungsform des Fahrzeugsystems kann es
a) ein Zugfahrzeug und einen mit dem Zugfahrzeug gekoppelten Sattelauflieger umfasst, wobei die Sensoreinrichtung an einer Hinterachse und/oder an einer Vorderachse des Zugfahrzeugs wenigstens einen Achslastsensor umfasst, aber an dem Sattelauflieger kein Achslastsensor vorhanden ist, oder
b) ein Zugfahrzeug ohne angekoppelten Anhänger umfasst, wobei die Sensoreinrichtung an einer Hinterachse oder an einer Vorderachse des Zugfahrzeugs wenigstens einen Achslastsensor umfasst, oder
c) ein Zugfahrzeug und einen mit dem Zugfahrzeug gekoppelten Sattelauflieger umfasst, wobei die Sensoreinrichtung wenigstens einen Achslastsensor an wenigstens einer Achse des Sattelaufliegers umfasst, aber an dem Zugfahrzeug kein Achslastsensor vorhanden ist, oder
d) ein Zugfahrzeug mit angekoppeltem Anhänger umfasst, der beispielsweise kein Sattelauflieger, sondern ein Deichselanhänger ist.

Insbesondere bei diesen Fahrzeugsystemkonfigurationen wäre eine Bestimmung der Gesamtmasse allein aufgrund der Achslastsignale der Achslastsensoren als Zustandsdaten zu ungenau, weil nicht alle Achsen mit Achslastsensoren ausgestattet sind. Daher wird hier beispielsweise die Gesamtmasse jeweils unabhängig von den Zustandsdaten geschätzt wird, aber die Achslastsignale als Zustandsdaten für die durch die Auswerteeinrichtung durchgeführte Beurteilung herangezogen, ob sich die Zustandsdaten zwischen dem ersten Zeitpunkt t1 und dem zweiten Zeitpunkt t2 verändert haben.

Im obigen Fall a), wenn beispielsweise lediglich an der Hinterachse des Zugfahrzeugs ein Achslastsensor, aber kein Achslastsensor an der Vorderachse und an der Achse oder den Achsen des Sattelaufliegers vorhanden ist, durch den Achslastsensor an der Hinterachse des Zugfahrzeugs die Stützlast des Sattelaufliegers ermittelt werden. Die Stützlast bildet dann einen Teil der Zustandsdaten und eignet sich daher für die Beurteilung, ob sich die Beladung der Zugfahrzeug-Sattelauflieger-Kombination zwischen dem ersten Zeitpunkt t1 und dem zweiten Zeitpunkt t2 geändert oder nicht geändert hat.

Im obigen Fall b), in welchem lediglich ein Zugfahrzeug, aber kein Anhänger in dem Fahrzeugsystem vorhanden ist, und in welchem die Sensoreinrichtung an einer Hinterachse oder an einer Vorderachse des Zugfahrzeugs wenigstens einen Achslastsensor umfasst, bildet die gemessene Achslast an der Vorderachse oder an der Hinterachse einen Teil der Zustandsdaten und eignet sich daher für die Beurteilung, ob sich die Beladung des Zugfahrzeugs zwischen dem ersten Zeitpunkt t1 und dem zweiten Zeitpunkt t2 geändert oder nicht geändert hat.

Im obigen Fall c), wenn an dem Zugfahrzeug kein Achslastsensor, aber an wenigstens einer Achse des Sattelaufliegers ein Achslastsensor vorhanden ist, können die Achslastsignale des oder der Achslastsensoren des Sattelaufliegers über eine Datenverbindung, z.B. über CAN ISO11992 vom Sattelauflieger in die Auswerteeinrichtung auf dem Zugfahrzeug übertragen und dort im Hinblick auf eine mögliche Beladungsänderung überprüft werden.

In den Fällen a), c) und d) kann über die Anhängererkennung und/oder die Kameraeinrichtung auch festgestellt werden, ob ein Sattelauflieger/Anhänger zwischen dem ersten Zeitpunkt t1 und dem zweiten Zeitpunkt t2 von dem Zugfahrzeug entkoppelt oder an dieses angekoppelt worden ist.

Gemäß einer Weiterbildung des Verfahrens wird (werden)
a) zu dem ersten Zeitpunkt (t1) der erste Wert (W1) für die Gesamtmasse des Fahrzeugsystems und die dann vorliegenden ersten Zustandsdaten (Z1) in einem nichtflüchtigen Datenspeicher gespeichert, und
b) zu dem wenigstens einen zweiten Zeitpunkt (t2) zweite Zustandsdaten (Z2) bestimmt und mit den ersten Zustandsdaten (Z1) verglichen,
   - und falls festgestellt worden ist, dass die zweiten Zustandsdaten (Z2) von den ersten Zustandsdaten (Z1) um mehr als eine erlaubte Abweichung abweichen, der erste Wert (W1) verworfen und der zweite Wert (W2) geschätzt oder ermittelt wird,
   - aber falls festgestellt worden ist, dass die zweiten Zustandsdaten (Z2) um die erlaubte Abweichung oder weniger als die erlaubte Abweichung von den ersten Zustandsdaten (Z1) abweichen, der erste Wert (W1) aus dem Datenspeicher ausgelesen und als gültiger Wert für die Gesamtmasse des Fahrzeugsystems beibehalten wird.

Auch kann bei dem Verfahren der erste Wert (W1) auch dann als gültiger Wert für die Gesamtmasse des Fahrzeugsystems beibehalten werden, wenn zwischen dem ersten Zeitpunkt (t1) und dem zweiten Zeitpunkt (t2) der Eintritt eines Ereignisses festgestellt worden ist, welches theoretisch zu einer Änderung der Gesamtmasse des Fahrzeugsystems geführt haben könnte. Das Ereignis kann wenigstens eines der folgenden Ereignisse sein: Wenigstens ein Zündungswechsel des Zugfahrzeugs, bevorzugt zwei Zündungswechsel hintereinander, und/oder ein Zeitraum des Stillstands des Fahrzeugsystems, welcher einen vorgegebenen Zeitraum des Stillstands des Fahrzeugsystems überschreitet.

Gemäß einer Weiterbildung des Verfahrens oder der Vorrichtung können die Zustandsdaten des Fahrzeugsystems erfasst werden:
a) durch wenigstens einen Achslastsensor an wenigstens einer Achse des Zugfahrzeugs und/oder an wenigstens einer Achse des wenigstens einen Anhängers, welcher als Sensorsignal wenigstens ein Achslastsignal liefert, und/oder
b) durch eine Anhängererkennung, welche als Sensorsignal eine Information über die Anzahl von an das Zugfahrzeug angekoppelten Anhängern liefert, und/oder
c) durch eine Kameraeinrichtung mit wenigstens einer Kamera (6), welche derart am Zugfahrzeug (2) und/oder an dem wenigstens einen Anhänger (3) angeordnet ist, dass sie wenigstens ein Bildsignal mit einer Information über die Anzahl von mit dem Zugfahrzeug (2) gekoppelter Anhänger (3) liefert, und/oder durch
d) durch wenigstens einen LIDAR-Sensor oder einen RADAR-Sensor, welcher derart am Zugfahrzeug und/oder an dem wenigstens einen Anhänger angeordnet ist, dass sie wenigstens ein Signal mit einer Information über die Anzahl von mit dem Zugfahrzeug gekoppelter Anhänger liefert, und/oder durch
e) wenigstens einen Ultraschallsensor, welcher derart am Zugfahrzeug und/oder an dem wenigstens einen Anhänger angeordnet ist, dass sie wenigstens ein Signal mit einer Information über die Anzahl von mit dem Zugfahrzeug gekoppelter Anhänger liefert, und/oder

Insbesondere kann die wenigstens eine Kamera bevorzugt derart am Zugfahrzeug angeordnet ist, dass sie einen rückwärtigen Bereich des Zugfahrzeugs erfasst und welche wenigstens ein Bildsignal mit einer Information über die Anzahl von mit dem Zugfahrzeug gekoppelter Anhänger liefert. Diese wenigstens eine Kamera kann auch eine Spiegelkamera sein, welche in oder an einem Seitenspiegel des Zugfahrzeugs angeordnet ist.

### Zeichnungen

Ausführungsbeispiele der Erfindung sind in der Zeichnung dargestellt und in der nachfolgenden Beschreibung näher erläutert. In der Zeichnung zeigt
- Fig. 1: eine schematische Darstellung eines Systems zur computergestützten Schätzung oder Ermittlung eines Werts für die Gesamtmasse eines Fahrzeugsystems gemäß einer bevorzugten Ausführungsform;
- Fig. 2: ein Ablaufschema eines Verfahrens zur computergestützten Schätzung oder Ermittlung eines Werts für die Gesamtmasse eines Fahrzeugsystems gemäß einer bevorzugten Ausführungsform;
- Fig. 3: ein Fahrzeugsystem bestehend aus einem Zugfahrzeug und einem Sattelauflieger als Anhänger gemäß einer ersten Ausführungsform, welches mit dem System gemäß Fig. 1 ausgerüstet ist;
- Fig. 4: ein Fahrzeugsystem bestehend aus einem Zugfahrzeug und einem Sattelauflieger als Anhänger gemäß einer zweiten Ausführungsform, welches mit dem System gemäß Fig. 1 ausgerüstet ist.

### Beschreibung der Ausführungsbeispiele

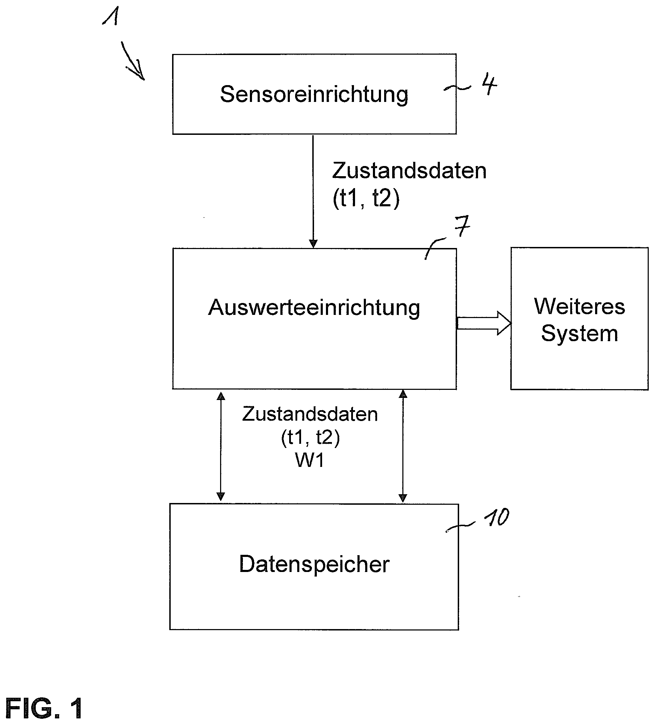

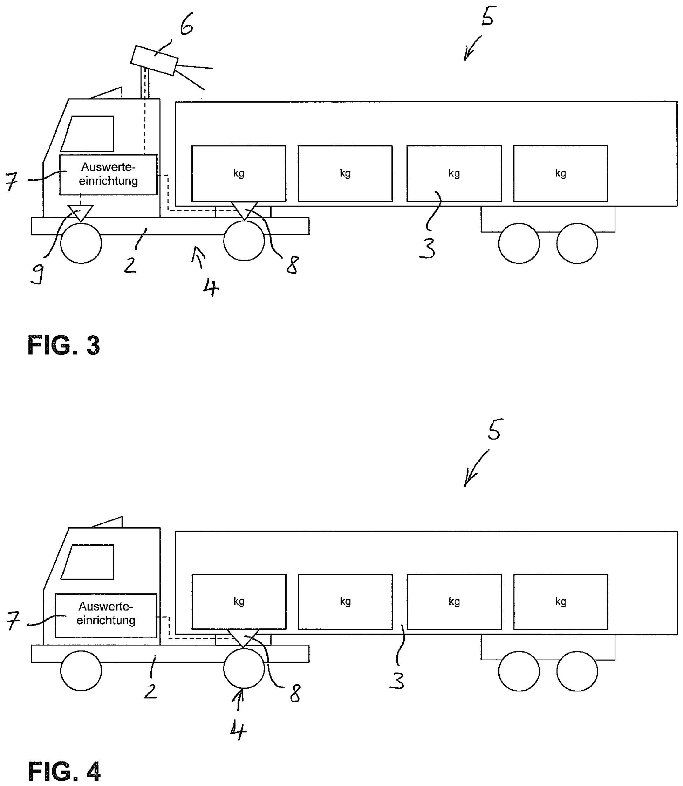

**Fig. 1** zeigt eine schematische Darstellung eines Systems 1 zur computergestützten Schätzung oder Ermittlung eines Werts für die Gesamtmasse eines Fahrzeugsystems 5 gemäß einer bevorzugten Ausführungsform. Das Fahrzeugsystem 5 umfasst ein Zugfahrzeug alleine oder ein Zugfahrzeug 2 wenigstens einen mit dem Zugfahrzeug gekoppelten Anhänger 3, wie in **Fig. 3** und **Fig. 4** gezeigt ist.

Das System 1 weist eine Sensoreinrichtung 4 auf, welche ausgebildet ist, dass ihre Sensorsignale Zustandsdaten des Fahrzeugsystems 5 repräsentieren, welche sich abhängig von einer Beladung des Fahrzeugsystems 5 und von einer Anzahl mit dem Zugfahrzeug 2 gekoppelter Anhänger 3 ändern und anhand welcher erkannt werden kann, ob sich eine Beladung des Fahrzeugsystems 5 und eine Anzahl mit dem Zugfahrzeug 2 gekoppelter Anhänger 3 zwischen einem ersten Zeitpunkt t1 und wenigstens einem in Bezug auf den ersten Zeitpunkt t1 späteren zweiten Zeitpunkt t2 geändert oder nicht geändert hat.

Bei der Ausführungsform von **Fig. 3** weist die Sensoreinrichtung 4 beispielsweise eine Kamera 6 auf, welche derart am Zugfahrzeug 2 angeordnet ist, dass sie einen rückwärtigen Bereich des Zugfahrzeugs 2 erfasst und welche einer beispielsweise an oder in dem Zugfahrzeug angeordneten elektronischen Auswerteeinrichtung 7 Bildsignale liefert, aus welchen die Auswerteeinrichtung 7 eine Information über die Anzahl von mit dem Zugfahrzeug 2 gekoppelter Anhänger 3 extrahieren kann. Im vorliegenden Fall extrahiert daher die Auswerteeinrichtung 7 aus den Bildsignalen der Kamera 6 die Information, dass ein Anhänger 3, insbesondere ein Sattelauflieger an das Zugfahrzeug 2 angekoppelt ist. Das Zugfahrzeug 2 verfügt hier beispielsweise über eine Vorderachse und eine Hinterachse und der Sattelauflieger 3 über zwei Hinterachsen.

Im Weiteren umfasst die Sensoreinrichtung 4 bei der Ausführung von **Fig. 3** wenigstens einen Hinterachs-Achslastsensor 8 an der Hinterachse und einen Vorderachs-Achslastsensor 9 an der Vorderachse des Zugfahrzeugs 2, wobei der Hinterachs-Achslastsensor 8 ein Hinterachs-Lastsignal an die Auswerteeinrichtung 7 liefert, welches eine Information über die aktuelle Hinterachslast enthält, und der Vorderachs-Achslastsensor 9 ein Vorderachs-Lastsignal, welches eine Information über die aktuelle Vorderachslast enthält. Der Sattelauflieger 3 verfügt hier vorzugsweise über keinen Achslastsensor.

Zusätzlich oder alternativ zur Kamera 6 kann die Sensoreinrichtung bei der Ausführung von **Fig. 3** auch eine Anhängererkennung umfassen, deren Anhängererkennungssignal, hier beispielsweise ein ABS-Signal, das beispielsweise über CAN ISO11992 vom Sattelauflieger 3 an die Auswerteeinrichtung 7 im Zugfahrzeug geliefert wird, dann der Auswerteeinrichtung 7 ebenfalls die Information übermittelt, dass ein Sattelauflieger 3 angekoppelt ist.

Die Information über die aktuelle Vorderachslast, die aktuelle Hinterachslast und über den an das Zugfahrzeug 2 angekoppelten Sattelauflieger 3 bilden Zustandsdaten des Fahrzeugsystems 5, welche die Auswerteeinrichtung 7 dann auswertet. Diese Auswertung beinhaltet, dass die Auswerteeinrichtung 7 anhand der Zustandsdaten erkennen kann, ob sich die Beladung des Fahrzeugsystems 5 und die Anzahl mit dem Zugfahrzeug 2 gekoppelter Anhänger 3 zwischen dem ersten Zeitpunkt t1 und dem zweiten Zeitpunkt t2 geändert oder nicht geändert hat.

Durch eine integrierten Zeitzähler kann die Auswerteeinrichtung 7 außerdem den ersten Zeitpunkt t1 und den zweiten Zeitpunkt t2 in ihrer zeitlichen Abfolge erkennen. Der erste Zeitpunkt t1 und der zweite Zeitpunkt t2 sind beliebige Zeitpunkte und lediglich im Hinblick auf eine zeitliche Abfolge relevant.

Wenn beispielsweise die Kamera 6 zum ersten Zeitpunkt t1 den Sattelauflieger 3 erfasst hat, aber zu dem zweiten Zeitpunkt bt2 nicht mehr, so wertet die Auswerteeinrichtung 7 die entsprechenden Bildsignale der Kamera 6 so aus, dass sich die Anzahl der angekoppelten Anhänger 3 zwischen dem ersten Zeitpunkt t1 und dem zweiten Zeitpunkt t2 geändert hat, nämlich von 1 auf Null.

Darüber hinaus kann die Auswerteeinrichtung 7 durch die Hinterachs- und Vorderachs-Lastsignale erkennen, ob sich die Gesamtmasse des Fahrzeugsystems 5 zwischen dem ersten Zeitpunkt t1 und dem zweiten Zeitpunkt t2 geändert hat. Denn eine Auflastung des Sattelaufliegers 3 alleine würde zu einer Erhöhung wenigstens der Hinterachslast des Zugfahrzeugs 2 führen, denn dann erhöht sich die Stützlast des Sattelaufliegers am Abstützpunkt des Zugfahrzeugs 2 über der Hinterachse. Andererseits würde auch eine Auflastung des Zugfahrzeugs 2 zu einer Änderung der Hinterachslast und der Vorderachslast führen, was wiederum an einem geänderten Hinterachs-Lastsignal und einem geänderten Vorderachs-Lastsignal erkennbar wäre.

In der Auswerteeinrichtung 7 sind weiterhin Schätzroutinen implementiert, welche insbesondere unabhängig von den Zustandsdaten zu dem ersten Zeitpunkt t1 im Rahmen einer ersten Schätzung einen ersten Wert W1 für die Gesamtmasse des Fahrzeugsystems schätzen. Dies erfolgt beispielsweise dadurch, dass in einem Fahrzyklus, d.h. bei fahrendem Fahrzeugsystem 5 auf der Basis einer Gleichgewichtsbeziehung zwischen der Antriebskraft und der Summe aus Trägheitskräften und den Antriebswiderständen die Gesamtmasse als erster Wert W1 geschätzt wird.

In der elektronischen Auswerteeinrichtung 7 sind weiterhin Routinen implementiert, welche zu dem zweiten Zeitpunkt t2 den ersten Wert W1 als gültigen Wert für die Gesamtmasse des Fahrzeugsystems beibehalten oder als Initialwert für eine weitere Ermittlung oder Schätzung der Gesamtmasse des Fahrzeugsystems 5 heranziehen, falls sie auf der Basis der Zustandsdaten erkannt haben, dass zwischen dem ersten Zeitpunkt t1 und dem zweiten Zeitpunkt t2 weder eine (signifikante) Änderung der Beladung des Fahrzeugsystems 5 noch eine Änderung der Anzahl mit dem Zugfahrzeug 2 gekoppelter Anhänger 3 stattgefunden hat. Keine Änderung der Beladung ist natürlich innerhalb eines gewissen Toleranzbereichs zu verstehen.

Andernfalls, wenn die Routinen der Auswerteeinrichtung 7 auf der Basis der Zustandsdaten erkannt haben, dass zwischen dem ersten Zeitpunkt t1 und zweiten Zeitpunkt t2 eine Änderung der Beladung des Fahrzeugsystems 5 und/oder eine Änderung der Anzahl mit dem Zugfahrzeug 2 gekoppelter Anhänger 3 stattgefunden hat (haben), dann schätzt die Auswerteeinrichtung 7 im Rahmen einer zweiten, auf die erste Schätzung zeitlich nachfolgenden Schätzung einen zweiten Wert W2 für die Gesamtmasse des Fahrzeugsystems 5 ebenfalls insbesondere unabhängig von den Zustandsdaten und verwirft den ersten Wert W1, weil dieser dann wegen der inzwischen stattgefundenen Änderung der Zustandsdaten zu ungenau ist.

Bei der Ausführungsform von **Fig. 4** umfasst gegenüber der Ausführungsform von **Fig. 3** die Sensoreinrichtung keine Kamera 6 und auch keinen Vorderachs-Lastsensor 9 an der Vorderachse sondern lediglich wenigstens einen Hinterachs-Lastsensor 8 an der Hinterachse. Auch verfügt der Sattelauflieger 3 vorzugsweise über keinen Achslastsensor.

Der Hinterachs-Lastsensor 8 hat dann eine Doppelfunktion, indem er der Auswerteeinrichtung 7 durch sein Hinterachs-Lastsignal einerseits eine Information darüber liefert, ob ein Sattelauflieger 3 an das Zugfahrzeug 2 angekoppelt ist. Denn dann kann der Hinterachs-Lastsensor 8 eine Information über die Stützlast des Sattelaufliegers 3 in seinem Hinterachs-Lastsignal liefern und damit auch eine Information darüber, ob sich die Anzahl mit dem Zugfahrzeug 2 gekoppelter Anhänger 3 zwischen dem ersten Zeitpunkt t1 und dem zweiten Zeitpunkt t2 geändert oder nicht geändert hat. Andererseits kann der Hinterachs-Lastsensor 8 auch eine Information darüber an die Auswerteeinrichtung 7 liefern, ob sich die Beladung des Fahrzeugsystems 5 zwischen dem ersten Zeitpunkt t1 und dem zweiten Zeitpunkt t2 geändert oder nicht geändert hat.

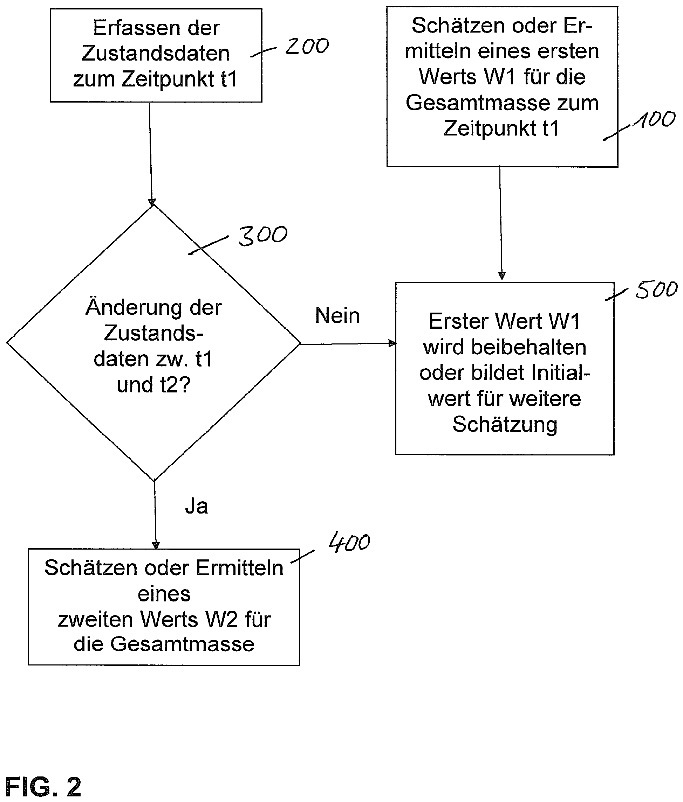

**Fig. 2** zeigt ein Ablaufschema des Verfahrens zur computergestützten Schätzung oder Ermittlung eines Werts für die Gesamtmasse eines Fahrzeugsystems 5 gemäß einer bevorzugten Ausführungsform. In einem Schritt 100 schätzt die Auswerteeinrichtung 7 den ersten Wert W1 für die Gesamtmasse des Fahrzeugsystems 5 zu dem ersten Zeitpunkt t1. Weiterhin werden in einem Schritt 200 die Zustandsdaten zu dem ersten Zeitpunkt t1 beispielsweise wie oben beschrieben von der Sensoreinrichtung 4 erfasst und in die Auswerteeinrichtung 7 eingesteuert.

In einem Schritt 300 wird dann von der Auswerteeinrichtung 7 überprüft, ob sich die Zustandsdaten zwischen dem ersten Zeitpunkt t1 und dem zweiten Zeitpunkt t2, geändert haben, d.h. ob Sensorsignale vorliegen, welche auf eine Änderung der Beladung des Fahrzeugsystems 5 und/oder eine Änderung der Anzahl der an das Zugfahrzeug 2 angekoppelten Anhänger 3 zwischen dem ersten Zeitpunkt t1 und dem zweiten Zeitpunkt t2 schließen lassen. Falls dies der Fall ist ("Ja"), so verwirft die Auswerteeinrichtung 7 den ersten Wert W1, der dann zu ungenau ist und auch keinen Initialwert für eine zweite Schätzung bilden kann, und schätzt im Rahmen einer zweiten Schätzung einen zweiten Wert W2 für die Gesamtmasse des Fahrzeugsystems 5 in einem Schritt 400. Falls dies nicht der Fall ist ("Nein"), so behält die Auswerteeinrichtung 7 in einem Schritt 500 den ersten Wert W1 als gültigen Wert für die Gesamtmasse des Fahrzeugsystems 5 bei und führt dann bevorzugt keine weitere Schätzung aus.

Die Routinen der Auswerteeinrichtung 7 können auch ausgebildet sein, dass sie den ersten Wert W1 auch dann als gültigen Wert W1 für die Gesamtmasse des Fahrzeugsystems 5 beibehalten bzw. den ersten Wert W1 als Initialwert für eine weitere Schätzung der Gesamtmasse heranziehen, auch wenn zwischen dem ersten Zeitpunkt t1 und dem zweiten Zeitpunkt t2 durch die Auswerteeinrichtung 7 der Eintritt eines Ereignisses festgestellt worden ist, welches theoretisch zu einer Änderung der Gesamtmasse des Fahrzeugsystems 5 geführt haben könnte.

Ein solches Ereignis kann beispielsweise ein Zündungswechsel des Zugfahrzeugs 2 sein, wenn beispielsweise eine Antriebsmaschine des Zugfahrzeugs 2 vom Zustand "ein" in den Zustand "aus" bzw. in umgekehrter Reihenfolge geschaltet wird.

Beispielsweise wird hierzu angenommen, dass in einem ersten Fahrzyklus zu dem Zeitpunkt t1, bei dem sich Antriebsmaschine des Zugfahrzeugs im Zustand "ein" befindet, die Auswerteeinrichtung 7 den ersten Wert W1 für die Gesamtmasse des Fahrzeugsystems geschätzt und in einem nichtflüchtigen Datenspeicher 10 zusammen mit den im Zeitpunkt t1 vorliegenden Zustandsdaten gespeichert hat, wie in **Fig. 1** dargestellt ist. Da der Datenspeicher 10, z.B. ein EEPROM nichtflüchtig ist, bleiben der erste Wert W1 für die Gesamtmasse und die Zustandsdaten des Fahrzeugsystems 5 zum Zeitpunkt t1 erhalten, auch wenn ein Zündungswechsel von "ein" nach "aus" stattfindet, wenn das Fahrzeugsystem 5 beispielsweise geparkt wird.

Wenn das Fahrzeugsystem 5 von der Fahrt in den Stillstand eingebremst worden und dann ein Zündungswechsel vom Zustand "ein" in den Zustand "aus" stattgefunden hat, so könnte man bei einem solchen Zündungswechsel eigentlich erwarten, dass das sich im Stilstand befindliche und geparkte Fahrzeugsystem 5 beladen bzw. entladen wird.

Wenn aber dann zu dem Zeitpunkt t2, d.h. wenn die Antriebsmaschine des Zugfahrzeugs vom Zustand "aus" wieder in den Zustand "ein" geschaltet wird, so liest die Auswerteeinrichtung 7 die zum Zeitpunkt t1 ermittelten und gespeicherten Zustandsdaten wieder aus dem Datenspeicher 10 aus und vergleicht sie mit den zum Zeitpunkt t2 von der Sensoreinrichtung 4 neuerlich gelieferten Zustandsdaten.

Wenn dann die auf den ersten Zeitpunkt t1 und den zweiten Zeitpunkt t2 bezogenen Zustandsdaten dann nicht (signifikant) voneinander abweichen, so liest die Auswerteeinrichtung 7 den ersten Wert W1 aus dem Datenspeicher 10 aus und definiert ihn als gültigen Wert für die Gesamtmasse des Fahrzeugsystems 5, obwohl das Ereignis des hier beispielsweise zweifachen Zündungswechsels von "ein" auf "aus und von "aus" auf "ein" die Annahme gerechtfertigt hat, dass zwischen dem Zeitpunkt t1 und dem Zeitpunkt t2 das Fahrzeugsystem 5 beladen bzw. entladen worden ist und/oder sich die Anzahl der an das Zugfahrzeug 2 angekoppelten Anhänger 3 geändert hat.

Wenn hingegen auf den zweifachen Zündungswechsel hin die auf den ersten Zeitpunkt t1 und den zweiten Zeitpunkt t2 bezogenen Zustandsdaten (signifikant) voneinander abweichen, so ist dies ein Hinweis darauf, dass der erste Wert W1 zu ungenau ist, so dass die Auswerteeinrichtung 7 den ersten Wert W1 z.B. durch Löschen aus dem Datenspeicher 10 verwirft und innerhalb des sich anschließenden zweiten Fahrzyklus mit der Schätzung eines neuen, zweiten Werts W2 für die Gesamtmasse des Fahrzeugsystems 5 beginnt.

In einem weiteren Beispiel besteht das Ereignis beispielsweise darin, dass ein Zeitraum eines festgestellten Stillstands des Fahrzeugsystems 5 einen vorgegebenen Zeitraum des Stillstands des Fahrzeugsystems 5 überschritten hat. Auch hier kann man davon ausgehen, zwischen dem Zeitpunkt t1, in dem ausgehend von einem Fahrzustand das Fahrzeugsystem 5 in den Stillstand eingebremst worden ist, und dem Zeitpunkt t2, indem das Fahrzeugsystem 5 vom Stillstand wieder in Fahrt gesetzt wird, das Fahrzeugsystem 5 (z.B. bei laufender Antriebsmaschine) beladen bzw. entladen worden ist und/oder sich die Anzahl der an das Zugfahrzeug 2 angekoppelten Anhänger 3 geändert hat.

Mit anderen Worten wird dadurch verhindert, dass trotz Feststellung wenigstens eines Ereignisses durch die Auswerteeinrichtung 7, welches theoretisch zu einer Änderung der Gesamtmasse des Fahrzeugsystems 5 geführt haben könnte, aber tatsächlich nicht zu einer Änderung der Gesamtmasse des Fahrzeugsystems 5 geführt hat, der erste Wert W1 für die Gesamtmasse beibehalten oder weiterhin als Eingangswert für andere Systeme herangezogen und nicht neuerlich ein Wert für die Gesamtmasse geschätzt oder bestimmt wird.

Zum Erfassen eines solchen Ereignisses erhält die Auswerteeinrichtung 7 beispielsweise ein Geschwindigkeitssignal wenigstes eines Radgeschwindigkeitssensors des Zugfahrzeugs 2 und/oder des Anhängers 3, um den Stillstand bzw. die Fahrt feststellen zu können, und/oder das Signal eines Zündungsschalters des Zugfahrzeugs 2.

Bei den oben beschriebenen Ausführungsbeispielen ist zwar jeweils ein Anhänger an das Zugfahrzeug 2 angekoppelt und bildet mit diesem zusammen dann das Fahrzeugsystem. Jedoch kann das Fahrzeugsystem auch das Zugfahrzeug 2 und mehrere Anhänger 3 umfassen sowie auch lediglich nur das Zugfahrzeug 2. Das erfindungsgemäße System ist daher mit allen möglichen Fahrzeugsystemen kombinierbar.

### Bezugszeichenliste

- 1: System
- 2: Zugfahrzeug
- 3: Anhänger
- 4: Sensoreinrichtung
- 5: Fahrzeugsystem
- 6: Kamera
- 7: Auswerteeinrichtung
- 8: Hinterachs-Achslastsensor
- 9: Vorderachs-Achslastsensor
- 10: Datenspeicher
- 100-500: Verfahrensschritte
- W1: erster Wert
- W2: zweiter wert
- t1: erster Zeitpunkt
- t2: zweiter Zeitpunkt
- Z1: erste Zustandsdaten
- Z2: zweite Zustandsdaten

## Patentansprüche

1. System (1) zur computergestützten Schätzung oder Ermittlung eines Werts für die Gesamtmasse eines Fahrzeugsystems (5), welches ein Zugfahrzeug (2) und gegebenenfalls wenigstens einen mit dem Zugfahrzeug (2) gekoppelten Anhänger (3) umfasst, **dadurch gekennzeichnet, dass** das System
a) eine Sensoreinrichtung aufweist, welche ausgebildet ist, dass ihre Sensorsignale Zustandsdaten des Fahrzeugsystems repräsentieren, welche sich abhängig von einer Beladung des Fahrzeugsystems und von einer Anzahl mit dem Zugfahrzeug gekoppelter Anhänger ändern und anhand welcher erkannt werden kann, ob sich eine Beladung des Fahrzeugsystems und eine Anzahl mit dem Zugfahrzeug gekoppelter Anhänger zwischen einem ersten Zeitpunkt (t1) und wenigstens einem in Bezug auf den ersten Zeitpunkt (t1) späteren zweiten Zeitpunkt (t2) geändert oder nicht geändert hat, und
b) eine Auswerteeinrichtung aufweist, welche ausgebildet ist, dass sie insbesondere unabhängig von den Zustandsdaten zu einem ersten Zeitpunkt (t1) im Rahmen einer ersten Schätzung oder Ermittlung einen ersten Wert (W1) für die Gesamtmasse des Fahrzeugsystems schätzt oder ermittelt, wobei
c) die Auswerteeinrichtung weiterhin ausgebildet ist, dass sie anhand der Zustandsdaten erkennen kann, ob sich die Beladung des Fahrzeugsystems und die Anzahl mit dem Zugfahrzeug gekoppelter Anhänger zwischen dem ersten Zeitpunkt (t1) und dem wenigstens einen zweiten Zeitpunkt (t2) geändert oder nicht geändert hat, und dass
d) die Auswerteeinrichtung weiterhin ausgebildet ist, dass sie
- den ersten Wert (W1) als gültigen Wert für die Gesamtmasse des Fahrzeugsystems beibehält oder als Initialwert für eine weitere Ermittlung oder Schätzung der Gesamtmasse des Fahrzeugsystems heranzieht, falls sie auf der Basis der Zustandsdaten erkannt hat, dass zwischen dem ersten Zeitpunkt (t1) und dem zweiten Zeitpunkt (t2) weder eine signifikante Änderung der Beladung des Fahrzeugsystems (5) noch eine Änderung der Anzahl mit dem Zugfahrzeug (2) gekoppelter Anhänger (3) stattgefunden hat, aber
- im Rahmen einer zweiten, zeitlich auf die erste Schätzung oder Ermittlung nachfolgenden Schätzung oder Ermittlung einen zweiten Wert (W2) für die Gesamtmasse des Fahrzeugsystems (5) insbesondere unabhängig von den Zustandsdaten schätzt oder ermittelt und den ersten Wert (W1) verwirft, falls sie auf der Basis der Zustandsdaten erkannt hat, dass zwischen dem ersten Zeitpunkt (t1) und dem zweiten Zeitpunkt (t2) eine Änderung der Beladung des Fahrzeugsystems (5) und/oder eine Änderung der Anzahl mit dem Zugfahrzeug (2) gekoppelter Anhänger (3) stattgefunden hat (haben).

2. System nach Anspruch 1, **dadurch gekennzeichnet, dass** es einen nichtflüchtigen Datenspeicher (10) aufweist und die Auswerteeinrichtung (7) mit dem nichtflüchtigen Datenspeicher (10) derart zusammenwirkt, dass die Auswerteeinrichtung (7)
a) zu dem ersten Zeitpunkt (t1) den ersten Wert (W1) für die Gesamtmasse des Fahrzeugsystems (5) und die dann vorliegende ersten Zustandsdaten (Z1) in den nichtflüchtigen Datenspeicher einliest, und
b) zu dem wenigstens einen zweiten Zeitpunkt (t2) zweite Zustandsdaten (Z2) bestimmt und mit den ersten Zustandsdaten (Z1) vergleicht, und falls
- die zweiten Zustandsdaten (Z2) von den ersten Zustandsdaten (Z1) um mehr als eine erlaubte Abweichung abweichen, den ersten Wert (W1) verwirft und den zweiten Wert (W2) schätzt oder ermittelt, aber falls
- die zweiten Zustandsdaten (Z2) um die erlaubte Abweichung oder weniger als die erlaubte Abweichung von den ersten Zustandsdaten (Z1) abweichen, den ersten Wert (W1) aus dem Datenspeicher (10) ausliest und ihn als gültigen Wert für die Gesamtmasse des Fahrzeugsystems (5) beibehält oder heranzieht.

3. System nach Anspruch 1 oder 2, **dadurch gekennzeichnet, dass** die Auswerteeinrichtung (7) weiterhin ausgebildet ist, dass sie den ersten Wert (W1) auch dann als gültigen Wert für die Gesamtmasse des Fahrzeugsystems (7) beibehält oder heranzieht, auch wenn zwischen dem ersten Zeitpunkt (t1) und dem zweiten Zeitpunkt (t2) durch die Auswerteeinrichtung (7) der Eintritt eines Ereignisses festgestellt worden ist, welches theoretisch zu einer Änderung der Gesamtmasse des Fahrzeugsystems (5) geführt haben könnte.

4. System nach Anspruch 3, **dadurch gekennzeichnet, dass** das Ereignis wenigstens eines der folgenden Ereignisse ist:
a) wenigstens ein Zündungswechsel des Zugfahrzeugs (2),
b) ein Zeitraum des Stillstands des Fahrzeugsystems (5), welcher einen vorgegebenen Zeitraum des Stillstands des Fahrzeugsystems (5) überschreitet.

5. System nach einem der vorhergehenden Ansprüche, **dadurch gekennzeichnet, dass** die Sensoreinrichtung (4)
a) wenigstens einen Achslastsensor (8, 9) an wenigstens einer Achse des Zugfahrzeugs (2) und/oder an wenigstens einer Achse des wenigstens einen Anhängers (3) umfasst, welcher als Sensorsignal der Auswerteeinrichtung (7) wenigstens ein Achslastsignal liefert, und/oder
b) eine Anhängererkennung umfasst, welche als Sensorsignal der Auswerteeinrichtung (7) eine Information über die Anzahl von an das Zugfahrzeug (2) angekoppelten Anhängern (3) liefert, und/oder
c) eine Kameraeinrichtung mit wenigstens einer Kamera (6) umfasst, welche derart am Zugfahrzeug (2) und/oder an dem wenigstens einen Anhänger (3) angeordnet ist, dass sie wenigstens ein Bildsignal mit einer Information über die Anzahl von mit dem Zugfahrzeug (2) gekoppelter Anhänger (3) liefert, und/oder
d) wenigstens einen LIDAR-Sensor oder einen RADAR-Sensor, welcher derart am Zugfahrzeug (2) und/oder an dem wenigstens einen Anhänger (3) angeordnet ist, dass sie wenigstens ein Signal mit einer Information über die Anzahl von mit dem Zugfahrzeug (2) gekoppelter Anhänger (3) liefert, und/oder durch
e) wenigstens einen Ultraschallsensor, welcher derart am Zugfahrzeug (2) und/oder an dem wenigstens einen Anhänger (3) angeordnet ist, dass sie wenigstens ein Signal mit einer Information über die Anzahl von mit dem Zugfahrzeug (2) gekoppelter Anhänger (3) liefert.

6. Fahrzeugsystem (5), welches ein Zugfahrzeug (2) und gegebenenfalls wenigstens einen mit dem Zugfahrzeug (2) gekoppelten Anhänger (3) umfasst, **dadurch gekennzeichnet, dass** es ein Bremssystem oder ein Fahrzeugsteuersystem oder ein Fahrzeugregelsystem und ein System (1) nach einem der vorhergehenden Ansprüche umfasst, wobei das Bremssystem oder das Fahrzeugsteuersystem oder das Fahrzeugregelsystem mit dem System (1) derart zusammenwirkt, dass das System (1) den ersten Wert (W1) und/oder den zweiten Wert (W2) für die Gesamtmasse des Fahrzeugsystems (5) an das Bremssystem, das Fahrzeugsteuersystem oder an das Fahrzeugregelsystem liefert.

7. Fahrzeugsystem (5) nach Anspruch 6, **dadurch gekennzeichnet, dass** das Bremssystem oder das Fahrzeugsteuersystem oder das Fahrzeugregelsystem ein elektronisch geregeltes Bremssystem (EBS), eine Fahrdynamikregelung, eine Getriebesteuerung, eine Steuerung für wenigstens teilweises autonomes Fahren und/oder eine Koppelkraftregelung zwischen dem Zugfahrzeug (2) und dem wenigstens einen Anhänger (3) umfasst.

8. Fahrzeugsystem (5) nach Anspruch 6 oder 7, **dadurch gekennzeichnet, dass** es
a) ein Zugfahrzeug (2) und einen mit dem Zugfahrzeug (2) gekoppelten Sattelauflieger (3) umfasst, wobei die Sensoreinrichtung (4) an einer Hinterachse und/oder an einer Vorderachse des Zugfahrzeugs (2) wenigstens einen Achslastsensor umfasst, aber an dem Sattelauflieger kein Achslastsensor vorhanden ist, oder
b) ein Zugfahrzeug (2) ohne angekoppelten Anhänger (3) umfasst, wobei die Sensoreinrichtung (4) an einer Hinterachse oder an einer Vorderachse des Zugfahrzeugs (2) wenigstens einen Achslastsensor (8, 9) umfasst, oder
c) ein Zugfahrzeug (2) und einen mit dem Zugfahrzeug gekoppelten Sattelauflieger (3) umfasst, wobei die Sensoreinrichtung wenigstens einen Achslastsensor an wenigstens einer Achse des Sattelaufliegers umfasst, aber an dem Zugfahrzeug kein Achslastsensor vorhanden ist, oder
d) ein Zugfahrzeug (2) mit angekoppeltem Anhänger (3) umfasst.

9. Verfahren zur computergestützten Schätzung oder Ermittlung eines Werts für die Gesamtmasse eines Fahrzeugsystems (5), welches ein Zugfahrzeug (2) und gegebenenfalls wenigstens einen mit dem Zugfahrzeug (2) gekoppelten Anhänger (3) umfasst, **dadurch gekennzeichnet, dass** bei dem Verfahren
a) Zustandsdaten des Fahrzeugsystems (5) erfasst werden, welche sich abhängig von einer Beladung des Fahrzeugsystems (5) und von einer Anzahl mit dem Zugfahrzeug (2) gekoppelter Anhänger (3) ändern und anhand welcher erkannt werden kann, ob sich eine Beladung des Fahrzeugsystems (5) und eine Anzahl mit dem Zugfahrzeug (2) gekoppelter Anhänger zwischen einem ersten Zeitpunkt (t1) und wenigstens einem in Bezug auf den ersten Zeitpunkt (t1) späteren zweiten Zeitpunkt (t2) geändert oder nicht geändert hat, und
b) insbesondere unabhängig von den Zustandsdaten zu einem ersten Zeitpunkt (t1) im Rahmen einer ersten Schätzung oder Ermittlung ein erster Wert (W1) für die Gesamtmasse des Fahrzeugsystems (5) geschätzt oder ermittelt wird, wobei
- der erste Wert (W1) als gültiger Wert für die Gesamtmasse des Fahrzeugsystems (5) beibehalten oder als Initialwert für eine weitere Ermittlung oder Schätzung der Gesamtmasse des Fahrzeugsystems (5) hergezogen wird, falls auf der Basis der Zustandsdaten erkannt worden ist, dass zwischen dem ersten Zeitpunkt (t1) und dem zweiten Zeitpunkt (t2) weder eine signifikante Änderung der Beladung des Fahrzeugsystems (5) noch eine Änderung der Anzahl mit dem Zugfahrzeug (2) gekoppelter Anhänger (3) stattgefunden hat, aber
- im Rahmen einer zweiten, zeitlich auf die erste Schätzung oder Ermittlung nachfolgenden Schätzung oder Ermittlung ein zweiter Wert (W2) für die Gesamtmasse des Fahrzeugsystems (5) insbesondere unabhängig von den Zustandsdaten geschätzt oder ermittelt und der erste Wert (W1) verworfen wird, falls auf der Basis der Zustandsdaten erkannt worden ist, dass zwischen dem ersten Zeitpunkt (t1) und dem zweiten Zeitpunkt (t2) eine Änderung der Beladung des Fahrzeugsystems (5) und/oder eine Änderung der Anzahl mit dem Zugfahrzeug (2) gekoppelter Anhänger (3) stattgefunden hat (haben).

10. Verfahren nach Anspruch 9, **dadurch gekennzeichnet, dass**
a) zu dem ersten Zeitpunkt (t1) der erste Wert (W1) für die Gesamtmasse des Fahrzeugsystems (5) und die dann vorliegenden ersten Zustandsdaten (Z1) in einem nichtflüchtigen Datenspeicher (10) gespeichert, und
b) zu dem wenigstens einen zweiten Zeitpunkt (t2) zweite Zustandsdaten (Z2) bestimmt und mit den ersten Zustandsdaten (Z1) verglichen werden,
- und falls festgestellt worden ist, dass die zweiten Zustandsdaten (Z2) von den ersten Zustandsdaten (Z1) um mehr als eine erlaubte Abweichung abweichen, der erste Wert (W1) verworfen und der zweite Wert (W2) geschätzt oder ermittelt wird,
- aber falls festgestellt worden ist, dass die zweiten Zustandsdaten (Z2) um die erlaubte Abweichung oder weniger als die erlaubte Abweichung von den ersten Zustandsdaten (Z1) abweichen, der erste Wert (W1) aus dem Datenspeicher (10) ausgelesen und als gültiger Wert für die Gesamtmasse des Fahrzeugsystems (5) beibehalten oder herangezogen wird.

11. Verfahren nach Anspruch 9 oder 10, **dadurch gekennzeichnet, dass** der erste Wert (W1) auch dann als gültiger Wert für die Gesamtmasse des Fahrzeugsystems (5) beibehalten oder herangezogen wird, wenn zwischen dem ersten Zeitpunkt (t1) und dem zweiten Zeitpunkt (t2) der Eintritt eines Ereignisses festgestellt worden ist, welches theoretisch zu einer Änderung der Gesamtmasse des Fahrzeugsystems (5) geführt haben könnte.

12. Verfahren nach Anspruch 11, **dadurch gekennzeichnet, dass** das Ereignis wenigstens eines der folgenden Ereignisse ist:
a) Wenigstens ein Zündungswechsel des Zugfahrzeugs (2),
b) ein Zeitraum des Stillstands des Fahrzeugsystems (5), welcher einen vorgegebenen Zeitraum des Stillstands des Fahrzeugsystems (5) überschreitet.

13. Verfahren nach einem der Ansprüche 9 bis 12, **dadurch gekennzeichnet, dass** die Zustandsdaten des Fahrzeugsystems (5) erfasst werden:
a) durch wenigstens einen Achslastsensor (8, 9) an wenigstens einer Achse des Zugfahrzeugs (2) und/oder an wenigstens einer Achse des wenigstens einen Anhängers (3), welcher als Sensorsignal wenigstens ein Achslastsignal liefert, und/oder
b) durch eine Anhängererkennung, welche als Sensorsignal eine Information über die Anzahl von an das Zugfahrzeug (2) angekoppelten Anhängern (3) liefert, und/oder
c) durch eine Kameraeinrichtung mit wenigstens einer Kamera (6), welche derart am Zugfahrzeug (2) und/oder an dem wenigstens einen Anhänger (3) angeordnet ist, dass sie wenigstens ein Bildsignal mit einer Information über die Anzahl von mit dem Zugfahrzeug (2) gekoppelter Anhänger (3) liefert, und/oder durch
d) wenigstens einen LIDAR-Sensor oder einen RADAR-Sensor, welcher derart am Zugfahrzeug (2) und/oder an dem wenigstens einen Anhänger (3) angeordnet ist, dass sie wenigstens ein Signal mit einer Information über die Anzahl von mit dem Zugfahrzeug (2) gekoppelter Anhänger (3) liefert, und/oder durch
e) wenigstens einen Ultraschallsensor, welcher derart am Zugfahrzeug (2) und/oder an dem wenigstens einen Anhänger (3) angeordnet ist, dass sie wenigstens ein Signal mit einer Information über die Anzahl von mit dem Zugfahrzeug (2) gekoppelter Anhänger (3) liefert.

## Claims

1. System (1) for the computer-aided estimation or determination of a value for the total mass of a vehicle system (5), which comprises a towing vehicle (2) and, if necessary, at least one trailer (3) coupled with the towing vehicle (2), **characterized in that** the system
a) has a sensor device, which is configured so that its sensor signals represent physical data of the vehicle system, which varies as a function of a loading of the vehicle system and a number of trailers coupled with the towing vehicle and on the basis of which it can be detected whether a loading of the vehicle system and a number of trailers coupled with the towing vehicle have changed or not changed between a first point in time (t1) and at least one second point in time (t2) later than the first point in time (t1), and
b) has an processing device, which is configured such that, in particular independently of the physical data, it estimates or determines a first value (W1) for the total mass of the vehicle system at a first point in time (t1) as part of a first estimation or determination, wherein
c) the processing device is further configured so that it can detect, on the basis of the physical data, whether the loading of the vehicle system and the number of trailers coupled with the towing vehicle have changed or not between the first point in time (t1) and the at least one second point in time (t2), and **in that**
d) the processing device is further configured such that it
- maintains the first value (W1) as the valid value for the total mass of the vehicle system or uses it as an initial value for a further determination or estimation of the total mass of the vehicle system, if it has detected, on the basis of the physical data, that between the first point in time (t1) and the second point in time (t2) no significant change in the loading of the vehicle system (5) and no change in the number of trailers (3) coupled with the towing vehicle (2), but
- as part of a second estimation or determination subsequent to the first estimation or determination estimates or determines a second value (W2) for the total mass of the vehicle system (5), in particular independently of the physical data, and discards the first value (W1) if it has detected on the basis of the physical data that a change in the loading of the vehicle system (5) and/or a change in the number of trailers (3) coupled with the towing vehicle (2) has occurred between the first point in time (t1) and the second point in time (t2).

2. System according to claim 1, **characterized in that** it includes a non-transitory data memory (10) and the processing device (7) cooperate with the non-transitory data memory (10) so that the processing device (7)
a) at the first point in time (t1) reads the first value (W1) for the total mass of the vehicle system (5) and the first physical data (Z1) then present into the non-transitory data memory, and
b) at the at least one second point in time (t2) determines second physical data (Z2) and compares it with the first physical data (Z1), and if
- the second physical data (Z2) deviates from the first physical data (Z1) by more than a permitted deviation, discards the first value (W1) and estimates or determines the second value (W2), but if
- the second physical data (Z2) deviates from the first physical data (Z1) by the permitted deviation or less than the permitted deviation, reads the first value (W1) from the data memory (10) and maintains or uses it as a valid value for the total mass of the vehicle system (5).

3. System according to claim 1 or 2, **characterized in that** the processing device (7) is further configured such that it also maintains or uses the first value (W1) as the valid value for the total mass of the vehicle system (7), even if, between the first point in time (t1) and the second point in time (t2), the processing device (7) has detected the occurrence of an event, which could theoretically have led to a change in the total mass of the vehicle system (5).

4. System according to claim 3, **characterized in that** the event is at least one of the following events:
a) at least one ignition change of the towing vehicle (2),
b) a idle period of the vehicle system (5), which exceeds a predetermined idle period of the vehicle system (5).

5. System according to any one of the preceding claims, **characterized in that** the sensor device (4)
a) comprises at least one axle load sensor (8, 9) on at least one axle of the towing vehicle (2) and/or on at least one axle of the at least one trailer (3), which supplies at least one axle load signal as a sensor signal of the processing device (7), and/or
b) comprises a trailer detection, which provides the processing device (7) with information about the number of trailers (3) coupled with the towing vehicle (2) as a sensor signal, and/or
c) comprises a camera device with at least one camera (6), which is arranged at the towing vehicle (2) and/or at the at least one trailer (3) so that it provides at least one image signal with information about the number of trailers (3) coupled with the towing vehicle (2), and/or
d) at least one LIDAR sensor or RADAR sensor, which is arranged at the towing vehicle (2) and/or at the at least one trailer (3) so that it provides at least one signal with information regarding the number of trailers (3) coupled with the towing vehicle (2), and/or by
e) at least one ultrasound sensor, which is arranged at the towing vehicle (2) and/or at the at least one trailer (3) so that it provides at least one signal with information regarding the number of trailers (3) coupled with the towing vehicle (2).

6. Vehicle system (5), which comprises a towing vehicle (2) and, if necessary, at least one trailer coupled with the towing vehicle (2), **characterised in that** it comprises a braking system or a vehicle control system or a vehicle regulation system and a system (1) according to any one of the preceding claims, wherein the braking system or the vehicle control system or the vehicle regulation system cooperates with the system (1) so that the system (1) supplies the first value (W1) and/or the second value (W2) for the total mass of the vehicle system (5) to the braking system, the vehicle control system or the vehicle regulation system.

7. Vehicle system (5) according to claim 6, **characterized in that** the brake system or the vehicle control system or the vehicle regulation system comprises an electronically controlled braking system (EBS), a driving drive regulation, a transmission control, a control for at least partially autonomous driving and/or a coupling force regulation between the towing vehicle (2) and the at least one trailer (3).

8. Vehicle system (5) according to claim 6 or 7, **characterized in that** it comprises
a) a towing vehicle (2) and a semi-trailer (3) coupled with the towing vehicle (2), wherein the sensor device (4) comprises at least one axle load sensor on a rear axle and/or on a front axle of the towing vehicle (2), but no axle load sensor is present on the semi-trailer, or
b) a towing vehicle (2) without a coupled trailer (3), wherein the sensor device (4) comprises at least one axle load sensor (8, 9) on a rear axle or on a front axle of the towing vehicle (2), or
c) a towing vehicle (2) and a semi-trailer (3) coupled with the towing vehicle, wherein the sensor device comprises at least one axle load sensor on at least one axle of the semi-trailer, but no axle load sensor is provided on the towing vehicle, or
d) a towing vehicle (2) with a coupled trailer (3).

9. Method for the computer-aided estimation or determination of a value for the total mass of a vehicle system (5), which comprises a towing vehicle (2) and, if necessary, at least one trailer (3) coupled with the towing vehicle (2), **characterized in that** in the method
a) physical data of the vehicle system (5) is detected, which varies as a function of a loading of the vehicle system (5) and a number of trailers (3) coupled with the towing vehicle (2) and on the basis of which it can be determined whether the loading of the vehicle system (5) and the number of trailers coupled with the towing vehicle (2) has changed or not changed between a first point in time (t1) and at least one second point in time (t2) later than the first point in time (t1), and
b) in particular independently of the physical data a first value (W1) for the total mass of the vehicle system (5) is estimated or determined as part of a first estimation or determination at a first point in time (t1), wherein
- the first value (W1) is maintained as a valid value for the total mass of the vehicle system (5) or is used as an initial value for a further determination or estimation of the total mass of the vehicle system (5), if it has been detected on the basis of the physical data that no significant change in the loading of the vehicle system (5) and no change in the number of trailers (3) coupled with the towing vehicle (2) has occurred between the first point in time (t1) and the second point in time (t2), but
- as part of a second estimation or determination subsequent to the first estimation or determination, a second value (W2) for the total mass of the vehicle system (5) is estimated or determined, in particular independently of the physical data, and the first value (W1) is discarded, if, on the basis of the physical data, it has been determined that a change in the loading of the vehicle system (5) and/or a change in the number of trailers (3) coupled with the towing vehicle (2) has occurred between the first point in time (t1) and the second point in time (t2).

10. Method according to claim 9, **characterized in that**
a) at the first point in time (t1) the first value (W1) for the total mass of the vehicle system (5) and the first physical data (Z1) then present are stored in a non-transitory data memory (10), and
b) at the at least one second point in time (t2) second physical data (Z2) are determined and compared with the first physical data (Z1),
- and if it has been determined that the second physical data (Z2) deviates from the first physical data (Z1) by more than a permitted deviation, the first value (W1) is discarded and the second value (W2) is estimated or determined,
- but if it is determined that the second physical data (Z2) deviates from the first physical data (Z1) by the permitted deviation or less than the permitted deviation, the first value (W1) is read from the memory (10) and maintained or used as the valid value for the total mass of the vehicle system (5).

11. Method according to claim 9 or 10, **characterized in that** the first value (W1) is also maintained or used as the valid value for the total mass of the vehicle system (5), if the occurrence of an event has been detected between the first point in time (t1) and the second point in time (t2) which could theoretically have caused a change in the total mass of the vehicle system (5).

12. Method according to claim 11, **characterized in that** the event is at least one of the following events:
a) at least one ignition change of the towing vehicle (2),
b) a idle period of the vehicle system (5), which exceeds a predetermined idle period of the vehicle system (5).

13. Method according to any one of claims 9 to 12, **characterized in that** the physical data of the vehicle system (5) is detected by:
a) at least one axle load sensor (8, 9) on at least one axle of the towing vehicle (2) and/or on at least one axle of the at least one trailer (3), which provides at least one axle load signal as a sensor signal, and/or
b) a trailer detection, which provides information regarding the number of trailers (3) coupled with the towing vehicle (2), and/or
c) a camera device with at least one camera (6), which is arranged at the towing vehicle (2) and/or at the at least one trailer (3) so that it provides at least one image signal with information regarding the number of trailers (3) coupled with the towing vehicle (2), and/or
d) at least one LIDAR sensor or RADAR sensor, which is arranged at the towing vehicle (2) and/or at the at least one trailer (3) so that it provides at least one signal with information regarding the number of trailers (3) coupled with the towing vehicle (2), and/or by
e) at least one ultrasound sensor, which is arranged at the towing vehicle (2) and/or at the at least one trailer (3) so that it provides at least one signal with information regarding the number of trailers (3) coupled with the towing vehicle (2).

## Revendications

1. Système (1) d'estimation ou de détermination assistée par ordinateur d'une valeur pour la masse totale d'un système de véhicule (5) qui comprend un véhicule tracteur (2) et éventuellement au moins une remorque (3) couplée au véhicule tracteur (2), **caractérisé en ce que** le système
a) présente un dispositif capteur qui est configuré afin que ses signaux de capteur représentent des données d'état du système de véhicule qui se modifient en fonction d'une charge du système de véhicule et d'un nombre de remorques couplées au véhicule tracteur et à l'aide duquel il est possible de détecter si une charge du système de véhicule et un nombre de remorques couplées au véhicule tracteur a été modifié ou non entre un premier moment (t1) et au moins un second moment (t2) ultérieur par rapport au premier moment (t1) et
b) présente un dispositif d'évaluation qui est configuré afin qu'il estime ou détermine, en particulier indépendamment des données d'état à un premier moment (t1), dans le cadre d'une première estimation ou détermination une première valeur (W1) pour la masse totale du système de véhicule, dans lequel
c) le dispositif d'évaluation est en outre configuré afin qu'il puisse détecter à l'aide des données d'état si la charge du système de véhicle et le nombre de remorques couplées au véhicule tracteur a été modifié ou non entre le premier moment (t1) et le au moins un second moment (t2) et **en ce que**
d) le dispositif d'évaluation est en outre configuré de telle sorte qu'il
- conserve la première valeur (W1) comme valeur valide pour la masse totale du système de véhicule ou l'utilise comme valeur initiale pour une autre détermination ou estimation de la masse totale du système de véhicule au cas où il a détecté sur la base des données d'état qu'aucune modification significative de la charge du système de véhicule (5) et qu'aucune modification du nombre de remorques (3) couplées au véhicule tracteur (2) n'ont eu lieu entre le premier moment (t1) et le second moment (t2), mais
- dans le cadre d'une seconde estimation ou détermination suivant temporellement la première estimation ou détermination estime ou détermine une seconde valeur (W2) pour la masse totale du système de véhicule (5), en particulier indépendamment des données d'état et rejette la première valeur (W1) au cas où il a détecté sur la base des données d'état qu'une modification de la charge du système de véhicule (5) et/ou une modification du nombre de remorques (3) couplées au véhicule tracteur (2) a/ont eu lieu entre le premier moment (t1) et le second moment (t2).

2. Système selon la revendication 1, **caractérisé en ce qu'**il présente une mémoire de données non transitoire (10) et le dispositif d'évaluation (7) coopère avec la mémoire de données (10) non transitoire de telle manière que le dispositif d'évaluation (7)
a) lise lors du premier moment (t1) la première valeur (W1) pour la masse totale du système de véhicule (5) et les premières données d'état (Z1) alors présentes dans la mémoire de données non transitoire et
b) détermine lors de l'au moins un second moment (t2) des secondes données d'état (Z2) et les compare avec les premières données d'état (Z1), et au cas
- où les secondes données d'état (Z2) divergent des premières données d'état (Z1) de plus d'un écart permis, rejette la première valeur (W1) et estime ou détermine la seconde valeur (W2) mais au cas où
- les secondes données d'état (Z2) divergent de l'écart permis ou moins que l'écart permis par rapport aux premières données d'état (Z1), lit la première valeur (W1) depuis la mémoire de données (10) et la conserve ou l'utilise comme valeur valide pour la masse totale du système de véhicule (5).

3. Système selon la revendication 1 ou 2, **caractérisé en ce que** le dispositif d'évaluation est en outre configuré afin qu'il conserve ou utilise également la première valeur (W1) comme valeur valide pour la masse totale du système de véhicule (7) même si l'entrée d'un évènement a été constatée entre le premier moment (t1) et le second moment (t2) par le dispositif d'évaluation (7), évènement qui aurait pu théoriquement avoir entraîné une modification de la masse totale du système de véhicule (5).

4. Système selon la revendication 3, **caractérisé en ce que** l'évènement est au moins l'un des évènements suivants :
a) au moins un changement d'allumage du véhicule tracteur (2),
b) une période d'arrêt du système de véhicule (5) qui dépasse une période prédéfinie de l'arrêt du système de véhicule (5).

5. Système selon l'une quelconque des revendications précédentes, **caractérisé en ce que** le dispositif capteur (4)
a) comprend au moins un capteur de charge sur l'essieu (8, 9) au niveau d'au moins un essieu du véhicule tracteur (2) et/ou au niveau d'au moins un essieu de la au moins une remorque (3) qui fournit comme signal de capteur du dispositif d'évaluation (7) au moins un signal de charge sur l'essieu et/ou
b) comprend une détection de remorque qui fournit comme signal de capteur du dispositif d'évaluation (7) une information sur le nombre de remorques (3) couplées au véhicule tracteur (2) et/ou
c) comprend un dispositif de caméra avec au moins une caméra (6) qui est agencée au niveau du véhicule tracteur (2) et/ou au niveau de la au moins une remorque (3) de telle manière qu'elle fournisse au moins un signal d'image avec une information sur le nombre de remorques (3) couplées au véhicule tracteur (2) et/ou
d) au moins un capteur LIDAR ou un capteur RADAR qui est agencé au niveau du véhicule tracteur (2) et/ou au niveau de la au moins une remorque (3) de telle manière qu'il fournisse au moins un signal avec une information sur le nombre de remorques (3) couplées au véhicule tracteur (2) et/ou par
e) au moins un capteur à ultrasons qui est agencé au niveau du véhicule tracteur (2) et/ou au niveau de la au moins une remorque (3) de telle manière qu'il fournisse au moins un signal avec une information sur le nombre de remorques (3) couplées au véhicule tracteur (2).

6. Système de véhicule (5) qui comprend un véhicule tracteur (2) et éventuellement au moins une remorque (3) couplée au véhicule tracteur (2), **caractérisé en ce**qu'il comprend un système de freinage ou un système de commande de véhicule ou un système de régulation de véhicule et un système (1) selon l'une quelconque des revendications précédentes, dans lequel le système de freinage ou le système de commande de véhicule ou le système de régulation de véhicule interagit avec le système (1) de telle manière que le système (1) fournisse la première valeur (W1) et/ou la seconde valeur (W2) pour la masse totale du système de véhicule (5) au système de freinage, au système de commande de véhicule ou au système de régulation de véhicule.

7. Système de véhicule (5) selon la revendication 6, **caractérisé en ce que** le système de freinage ou le système de commande de véhicule ou le système de régulation de véhicule comprend un système de freinage régulé électroniquement (EBS), un système de contrôle dynamique de la trajectoire, une commande de boîte de vitesse, une commande pour une conduite au moins partiellement autonome et/ou une régulation de force de couplage entre le véhicule tracteur (2) et la au moins une remorque (3).

8. Système de véhicule (5) selon la revendication 6 ou 7, **caractérisé en ce qu'**il
a) comprend un véhicule tracteur (2) et un semi-remorque (3) couplé au véhicule tracteur (2), dans lequel le dispositif capteur (4) comprend, au niveau d'un essieu arrière et/ou au niveau d'un essieu avant du véhicule tracteur (2), au moins un capteur de charge sur l'essieu mais aucun capteur de charge sur l'essieu n'est présent au niveau du semi-remorque ou
b) comprend un véhicule tracteur (2) sans remorque (3) couplée au véhicule tracteur (2), dans lequel le dispositif capteur (4) comprend, au niveau d'un essieu arrière et/ou au niveau d'un essieu avant du véhicule tracteur (2), au moins un capteur de charge sur l'essieu (8, 9) ou
c) comprend un véhicule tracteur (2) et un semi-remorque (3) couplé au véhicule tracteur, dans lequel le dispositif capteur comprend au moins un capteur de charge sur l'essieu au niveau d'au moins un essieu du semi-remorque mais aucun capteur de charge sur l'essieu n'est présent au niveau du véhicule tracteur ou
d) comprend un véhicule tracteur (2) avec une remorque couplée (3).

9. Procédé d'estimation ou de détermination assistée par ordinateur d'une valeur pour la masse totale d'un système de véhicule (5) qui comprend un véhicule tracteur (2) et éventuellement au moins une remorque (3) couplée au véhicule tracteur (2), **caractérisé en ce que** pour le procédé
a) des données d'état du système de véhicule (5) sont détectées, données qui sont modifiées en fonction d'une charge du système de véhicule (5) et d'un nombre de remorques (3) couplées au véhicule tracteur (2) et à l'aide desquelles il est possible de détecter si une charge du système de véhicule (5) et un nombre de remorques couplées au véhicule tracteur (2) a été modifié ou non entre un premier moment (t1) et au moins un second moment (t2) ultérieur par rapport au premier moment (t1) et
b) en particulier indépendamment des données d'état à un premier moment (t1) dans le cadre d'une première estimation ou détermination, une première valeur (W1) pour la masse totale du système de véhicule (5) est estimée ou déterminée, dans lequel
- la première valeur (W1) est conservée comme valeur valide pour la masse totale du système de véhicule (5) ou utilisée comme valeur initiale pour une autre détermination ou estimation de la masse totale du système de véhicule (5) au cas où il a été détecté sur la base des données d'état qu'aucune modification significative de la charge du système de véhicule (5) ni une modification du nombre de remorques (3) couplées au véhicule tracteur (2) n'ont eu lieu entre le premier moment (t1) et le second moment (t2), mais
- dans le cadre d'une seconde estimation ou détermination suivant temporellement la première estimation ou détermination une seconde valeur (W2) pour la masse totale du système de véhicule (5) est estimée ou déterminée en particulier indépendamment des données d'état, et la première valeur (W1) est rejetée au cas où il a été détecté sur la base des données d'état qu'une modification de la charge du système de véhicule (5) et/ou une modification du nombre de remorques (3) couplées au véhicule tracteur (2) a/ont eu lieu entre le premier moment (t1) et le second moment (t2).

10. Procédé selon la revendication 9, **caractérisé en ce que**
a) lors du premier moment (t1) la première valeur (W1) pour la masse totale du système de véhicule (5) et les premières données d'état (Z1) alors présentes sont enregistrées dans une mémoire de données (10) non transitoire et
b) lors de l'au moins un second moment (t2) des secondes données d'état (Z2) sont déterminées et comparées avec les premières données d'état (Z1),
- et au cas où il a été constaté que les secondes données d'état (Z2) divergent des premières données d'état (Z1) de plus d'un écart permis, la première valeur (W1) est rejetée et la seconde valeur (W2) est estimée ou déterminée,
- mais au cas où il a été constaté que les secondes données d'état (Z2) divergent de l'écart permis ou moins que l'écart permis par rapport aux premières données d'état (Z1), la première valeur (W1) est lue depuis la mémoire de données (10) et conservée ou utilisée comme valeur valide pour la masse totale du système de véhicule (5).

11. Procédé selon la revendication 9 ou 10, **caractérisé en ce que** la première valeur (W1) est conservée ou utilisée aussi comme valeur valide pour la masse totale du système de véhicule (5) si l'entrée d'un évènement a été constatée entre le premier moment (t1) et le second moment (t2), évènement qui aurait pu théoriquement avoir mené à une modification de la masse totale du système de véhicule (5).

12. Procédé selon la revendication 11, **caractérisé en ce que** l'évènement est au moins l'un des évènements suivants :
a) au moins un changement d'allumage du véhicule tracteur (2),
b) une période d'arrêt du système de véhicule (5) qui dépasse une période prédéfinie de l'arrêt du système de véhicule (5).

13. Procédé selon l'une quelconque des revendications 9 à 12, **caractérisé en ce que** les données d'état du système de véhicule (5) sont détectées :
a) par au moins un capteur de charge sur l'essieu (8, 9) au niveau d'au moins un essieu du véhicule tracteur (2) et/ou au niveau d'au moins un essieu de la au moins une remorque (3) qui fournit comme signal de capteur au moins un signal de charge sur l'essieu et/ou
b) par une détection de remorque qui fournit comme signal de capteur une information sur le nombre de remorques (3) couplées au véhicule tracteur (2) et/ou
c) par un dispositif de caméra avec au moins une caméra (6) qui est agencée au niveau du véhicule tracteur (2) et/ou au niveau de la au moins une remorque (3) de telle manière qu'elle fournisse au moins un signal d'image avec une information sur le nombre de remorques (3) couplées au véhicule tracteur (2) et/ou par
d) au moins un capteur LIDAR ou un capteur RADAR qui est agencé au niveau du véhicule tracteur (2) et/ou au niveau de la au moins une remorque (3) de telle manière qu'il fournisse au moins un signal avec une information sur le nombre de remorques (3) couplées au véhicule tracteur (2) et/ou par
e) au moins un capteur à ultrasons qui est agencé au niveau du véhicule tracteur (2) et/ou au niveau de la au moins une remorque (3) de telle manière qu'il fournisse au moins un signal avec une information sur le nombre de remorques (3) couplées au véhicule tracteur (2).
